# EUROPEAN PATENT SPECIFICATION

(11) **EP 3 468 778 B1**
(45) Date of publication and mention of the grant of the patent: **07.06.2023**
(21) Application number: 16904815.4
(22) Date of filing: 10.06.2016
(51) Int. Cl.: B29C 64/165, B33Y 70/00, C09D 11/10, C09D 11/38, B33Y 10/00, B33Y 30/00

(54) **MATERIAL SETS**
MATERIALSETS
ENSEMBLES DE MATÉRIAUX

(43) Date of publication of application: 17.04.2019
(73) Proprietor: Hewlett-Packard Development Company, L.P., Spring TX 77389 (US)
(72) Inventor: EMAMJOMEH, Ali, San Diego California 92127-1899 (US); PRASAD, Keshava A., San Diego California 92127-1899 (US); GARCIA, Andre, San Diego California 92127-1899 (US)
(74) Representative: HGF
(86) International application number: PCT/US2016/036882
(87) International publication number: WO 2017/213666

(56) References cited:
- EP-A1- 2 027 220
- EP-A2- 2 001 656
- EP-B1- 2 001 656
- WO-A1-2016/080993
- JP-A- 2012 036 287
- JP-A- 2015 145 071
- US-A1- 2007 241 482
- US-A1- 2008 122 141
- US-A1- 2014 252 672
- US-A1- 2015 165 680
- US-A1- 2015 251 354
- US-A1- 2016 152 860

## Description

### BACKGROUND

Methods of 3-dimensional (3D) digital printing, a type of additive manufacturing, have continued to be developed over the last few decades. Various methods for 3D printing have been developed, including heat-assisted extrusion, selective laser sintering, photolithography, as well as others. In selective laser sintering, for example, a powder bed may be exposed to point heat from a laser to melt the powder wherever the object is to be formed. This allows for manufacturing complex parts that are difficult to manufacture using traditional methods. However, systems for 3D printing have historically been very expensive, though those expenses have been coming down to more affordable levels recently. In general, 3D printing technology improves the product development cycle by allowing rapid creation of prototype models for reviewing and testing. Unfortunately, the concept has been somewhat limited with respect to commercial production capabilities because the range of materials used in 3D printing can be likewise limited. Therefore, research continues in the field of new techniques and materials for 3D printing.

WO 2016/080993 A1 discloses a system for generating a three-dimensional object, the system comprising: first and second agent distributors to respectively selectively deliver a binder agent and a coalescing agent onto portions of a layer of build material; and a controller to control the first and second agent distributors to respectively selectively deliver the binder agent and the coalescing agent onto respective first and second portions of the layer in patterns derived from data representing a slice of the three-dimensional object to be generated, wherein the first portion having the binder agent is to bind and solidify into a binder matrix, and wherein when energy is applied to the layer the second portion having the coalescing agent is to coalesce and solidify.

EP 2027220 A1 discloses an ink set for ink-jet printing, comprising a cyan ink including cyan colorant, a magenta ink including magenta colorant, and a yellow ink including yellow colorant, wherein all three inks of the ink set include an infrared absorbing dye such that all three inks collectively have an overlapping infrared absorbance range.

### BRIEF DESCRIPTION OF THE DRAWINGS

FIG. 1 is a close-up side cross-sectional view of a layer of thermoplastic polymer powder, a fusing agent, and a detailing agent in accordance with examples of the present disclosure;
FIG. 2 is a close-up side cross-sectional view of a layer of thermoplastic polymer powder, a fusing agent, and a detailing agent in accordance with examples of the present disclosure; and
FIG. 3 is a schematic view of a 3-dimensional printing system in accordance with examples of the present disclosure.

The figures depict examples of the presently disclosed technology. However, it is understood that the present technology is not limited to the examples depicted.

### DETAILED DESCRIPTION

The present disclosure is drawn to the area of 3-dimensional printing. More specifically, the present disclosure provides material sets and systems for printing 3-dimensional parts that include a fusing agent and a detailing agent. The scope of protection conferred is determined by the claims.

In one aspect, a material set for use in the method described in the following paragraph includes a detailing agent including water; a splash reducing compound comprising an infrared-absorbing dye, and/or a polymeric binder that comprises a styrene-acrylic resin, a polyurethane, or mixtures thereof; and a water-soluble co-solvent. The material set furthers include a fusing agent including water and an energy absorber. In another example, the material set can further include thermoplastic polymer powder.

In another aspect, a method of printing a 3-dimensional part includes applying a first layer of thermoplastic polymer powder to a powder bed, applying a fusing agent to a first portion of the layer, and applying a detailing agent to a second portion of the layer immediately adjacent to the first portion, wherein the detailing agent comprises a splash reducing compound. Additional steps includes exposing the powder bed with electromagnetic energy sufficient to fuse the thermoplastic polymer powder with the fusing agent at the first portion, applying a second layer of thermoplastic polymer powder to the powder bed on top of the first layer, and applying detailing agent to the second portion wherein the thermoplastic polymer powder is not fused without substantial powder splash. For example, the splash reducing compound can include an infrared-absorbing dye, a polymeric binder, or combination thereof.

In another aspect, a 3-dimensional printing system includes a powder bed comprising a thermoplastic polymer powder, a fluid jet printer, a fusing radiation source to expose the powder bed to electromagnetic radiation sufficient to fuse thermoplastic polymer powder that has been printed with fusing agent. The fluid jet printer includes a first fluid ejector in communication with a reservoir of a detailing agent to print the detailing agent onto the powder bed, wherein the detailing agent comprises water; a splash reducing compound comprising an infrared-absorbing dye, and/or a polymeric binder that comprises a styrene-acrylic resin, a polyurethane, or mixtures thereof; and a water-soluble co-solvent. The fluid jet printer also includes a second fluid ejector in communication with a reservoir of a fusing agent to print the fusing agent onto the powder bed, wherein the fusing agent includes an energy absorber. In one example, the fusing radiation source can also be sufficient to enhance the splash reducing properties of the splash reducing compound with respect to a subsequently applied layer of thermoplastic polymer powder and subsequently applied detailing agent droplets.

In an exemplary printing process, a thin layer of thermoplastic polymer powder can be spread on a bed to form a powder bed. A printing head, such as a fluid jet print head, can then be used to print a fusing agent over portions of the powder bed corresponding to a thin layer of the three dimensional object to be formed. The fusing agent can include an energy absorber to absorb electromagnetic energy to generate sufficient heat to fuse the thermoplastic polymer powder. In some examples, the energy absorber can include a carbon- based pigment, such as a carbon black pigment, though other energy absorbers can be likewise used. In one example, however, carbon black pigments can effectively absorb electromagnetic radiation across a wide range of wavelengths. Therefore, carbon black pigments can effectively raise the temperature of the thermoplastic polymer powder onto which they may be printed. A detailing agent can be printed onto portions of the powder bed around the edges of the portions printed with the fusing agent. The detailing agent can act to cool the powder onto which it may be printed. Then the bed can be exposed to a light source, e.g., typically the entire bed. The fusing agent can absorb more energy from the light than the powder printed with the detailing agent or the surrounding unprinted powder. The absorbed light energy may be converted to thermal energy, causing the printed portions of the powder to melt and coalesce. This forms a solid layer. The portions of the powder printed with the detailing agent can be at a lower temperature because of the cooling effect of the detailing agent. This can prevent the powder around the edges of the solid layer from coalescing due to thermal bleed from the hotter powder that was printed with the fusing agent. After the first layer is formed in this way, a new thin layer of polymer powder can be spread over the powder bed and the process can be repeated to form additional layers until a complete 3-dimensional part is printed. Such 3-dimensional printing processes can achieve fast throughput with good accuracy.

In some examples of the presently disclosed technology, the detailing agent can be jettable, that is, formulated for use in a fluid jet printer such as a piezo or thermal inkjet printer. Fluid jet printing technology can be used to print the detailing agent onto the powder bed with high speed and high resolution. Various properties of the detailing agent can be adjusted to improve the performance of the detailing agent in fluid jet printing. For example, the detailing agent can be formulated to have low kogation, which refers to solid deposits formed on resistors in a thermal fluid jet printing system. In further examples, the detailing agent can be formulated to provide good decap performance, i.e., a low number of firing cycles required to resume printing from a fluid jet pen after the pen is idle for a period of time.

In addition to properties of the detailing agent that allow the detailing agent to be printed using fluid jet technology, the detailing agent can also be formulated to provide a strong cooling effect on the powder onto which the detailing agent may be printed. This cooling effect can increase the temperature difference between the powder printed with the fusing agent and the powder printed with the detailing agent during curing of the powder bed. A large temperature difference can help to provide that the powder printed with the detailing agent does not become fused while the powder printed with the fusing agent may be fused. In some examples, the detailing agent can have a high water content, such as 70 wt% to 90 wt%, to provide evaporative cooling of the powder onto which the detailing agent may be printed.

Furthermore, the inclusion of a splash reducing compound in the detailing agent can provide diminished powder splashing that may otherwise occur during digital printing. Thus, the term "splash reducing compound" refers to the compound added to the detailing agent that ameliorates or reduces or controls splash that may occur when the detailing agent is applied to a layer of thermoplastic polymer powder with a previously applied layer of thermoplastic polymer powder and detailing agent. For example, when a layer of powder is put down on a powder bed and a portion thereof is printed with detailing agent, the presence of the splash reducing compound in the detailing agent put down in a lower or previous thermoplastic polymer powder layer can assist subsequently applied layers of detailing from splashing when printed on the subsequently applied layer of thermoplastic polymer powder. In the instance of infrared-absorbing dyes, for example, the infrared energy used to fuse the part (where the powder and the fusing agent are in contact) can also warm and partially congeal or solidify the thermoplastic polymer powder and the detailing agent (containing the splash reducing compound) and cause a subsequently applied layer of powder to be applied to exhibit reduced powder splashing when printed with that layer of detailing agent. Alternatively, if the splash reducing compound is a binder, the tacky properties of the binder can likewise increase the structural integrity of the regions printed with detailing agent adjacent to the part, thereby reducing powder splashing. Reduced powder splash can improve the lifespan of a printhead, reduce part defects, and improve part yield, for example. Additionally reduced splash can also allow for higher print densities for the detailing agent, and thus, provide improved thermal bleed control and greater productivity.

**An** additional function of the detailing agent can include improving the appearance of the final 3-dimensional printed part. The detailing agent can be printed around the edges of each layer of the part. The edges of each layer make up the exterior surfaces of the final part. Thus, in some examples the detailing agent can include one or more colorants to modify the appearance of the exterior surfaces of the final part. When the splash reducing compound is an infrared-absorbing dye, for example, the infrared-absorbing dye can be the colorant. However, colorant can likewise be added in addition to the splash reducing compound in some instances, e.g., colorant can be added to the detailing agent when the splash reducing compound is a polymeric binder, or when the infrared-absorbing dye may benefit from an additional color additive.

In certain examples, the fusing agent used to fuse the layers can include a carbon black pigment as an energy absorber. The carbon black pigment can impart a black or dark gray color to the part. However, although the interior bulk volume of the part can have a consistent black color, the surfaces of the final part can sometimes have uneven coloration due to particles of the thermoplastic polymer powder that may be only partially colored by the carbon black pigment, or particles that may be uncolored by the carbon black pigment yet become embedded in the surface of the part. Therefore, in some examples the detailing agent can include colorants to improve the coloration of the surfaces of the part. Because the detailing agent can be printed around the edges of each layer of the part, the powder particles around the edges can be colored by the colorants in the detailing agent. If the colorants in the detailing agent are selected to match the bulk color of the printed part, then any polymer particles that become embedded in surfaces of the part can also have a matching color. Thus, the color uniformity of the final part can be improved. Thus, as mentioned above, the colorant can be an infrared-absorbing dye which is also the splash reducing compound, or the colorant can be added in addition to the splash reducing compound, e.g., polymeric binder splash reducing compound.

In some cases, matching the color of the detailing agent with the bulk color of the 3-dimensional printed part can present challenges. For example, when dyes are used as colorants in the detailing agent, it has been found that certain dyes can migrate differently from other dyes when applied to polymer powder. Without being bound to a particular theory, this may be related to differences in solubility of various dyes in the polymer powder. Such differences between dyes used in the detailing agent can lead to unexpected color changes when the detailing agent may be printed on the polymer powder. In one example, a detailing agent with dyes that appear to have a neutral black color can experience a hue shift toward a purple hue when the detailing agent may be printed on a polymer powder and cured. Thus, balancing the colorants in the detailing agent while also providing good cooling effect and good jetting properties can be challenging. However, certain formulations can provide detailing agents that function well as detailing agents in the 3-dimensional printing processes described herein, while also providing good jetting properties and uniform coloration of the surfaces of the final 3-dimensional printed part.

With this description in mind, disclosed herein are material sets including a fusing agent and a detailing agent. The fusing agent and detailing agent can each be formulated for fluid jet printing. In additional examples, the presently disclosed technology can encompass material sets of a fusing agent and a detailing agent, or a fusing agent, a detailing agent, and a thermoplastic polymer powder. As described, the fusing agent can be printed onto portions of a thermoplastic polymer powder bed and the bed can be irradiated with electromagnetic radiation to fuse the printed portions, which forms a single layer of the 3-dimensional part being printed. The detailing agent can be printed in areas at or near the edges of the portions that may be printed with the fusing agent. The detailing agent can have the effect of cooling the polymer powder around the edges of the portions printed with the fusing agent. Thus, when the portions printed with the fusing agent are fused by irradiation with electromagnetic energy, the polymer powder around the edges can remain at a lower temperature. This can prevent fusing of the polymer powder surrounding the edges of the fused layer, improving selectivity between the fused portions and the unfused portions of the powder bed.

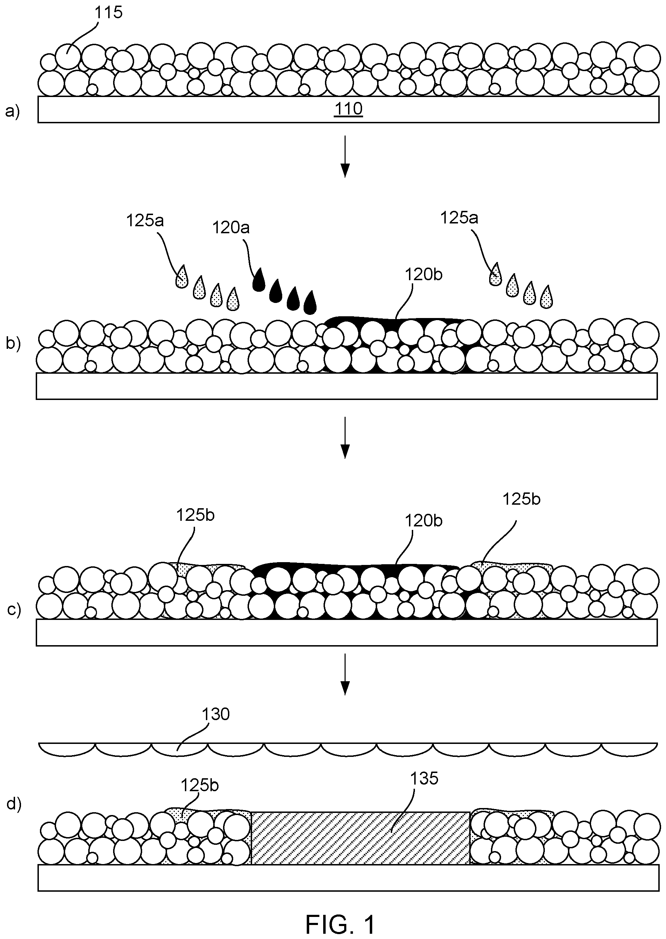

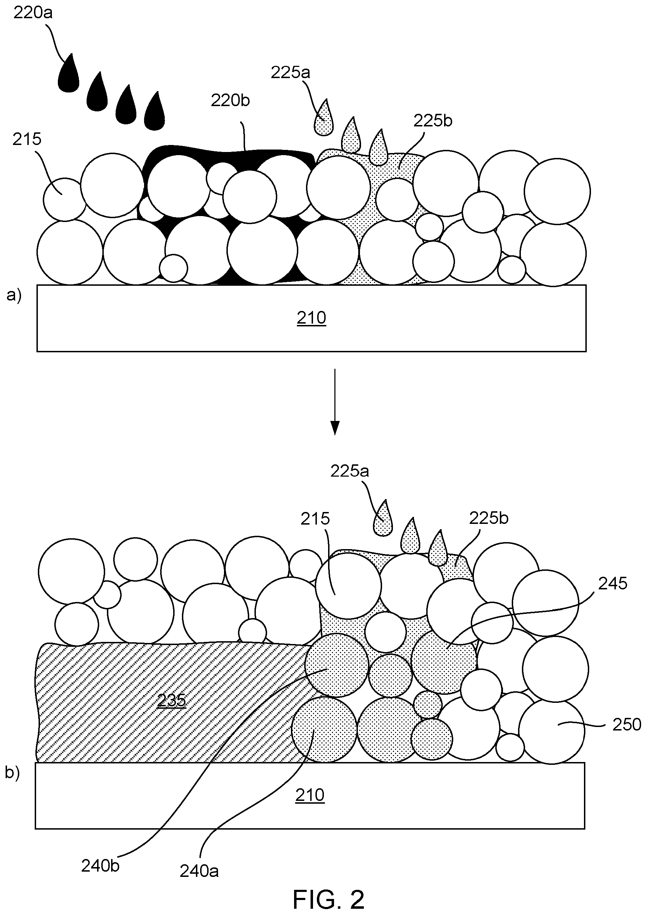

Examples of the material sets described above are shown in more detail in FIG. 1. With specific reference to FIG. 1, a) shows a build platform or movable floor 110 of a 3-dimensional printing system, to which is deposited a thin layer of thermoplastic polymer powder 115 to form a powder bed. Next, b) shows droplets of a fusing agent 120a as well as already deposited fusing agent 120b applied to and within a portion of the powder bed. Droplets of a detailing agent 125a may also be applied to portions of the powder bed adjacent to the edges of the portion printed with the fusing agent. Notably, in some examples, detailing agent may also or alternatively be applied to locations along with the fusing agent for purposes of cooling certain portions of the part, etc. The fusing agent 120b and detailing agent 125b applied to the powder bed admix and fill voids within the powder, as shown in c). The portion of the powder bed printed with the fusing agent may be then fused using a curing lamp 130 to form a fused part layer 135. In some cases, the detailing agent can partially evaporate off of the powder bed, leaving unfused thermoplastic polymer powder around the edge of the fused part layer, or to the extent it may remain, in some examples it may not substantially become integrated into the part being built. Likewise, in some examples, it may become integrated into a surface of the part, or within the part, depending on how it is used and/or applied. In either case, due to the presence of the splash reducing compound that is present in the detailing agent applied to the thermoplastic polymer powder (and partially fused by heat or infrared radiation, or by providing some binding properties), splash from subsequently applied powder and detailing agent can be minimized, as shown in more detail in FIG. 2. Once the fused part layer is formed, the build platform or moveable floor can then be lowered and the process can be repeated with additional layers of thermoplastic polymer powder to form additional fused layers of the 3-dimensional printed part.

It is noted that the fused part layer 135 shown in FIG. 1 is an idealized depiction of the fused layers formed in practice. In some cases, fused layers formed using the processes described herein do not have a perfect rectangular cross section as shown in FIG. 1 , because edges of the fused layers can often include partially fused polymer particles embedded into the fused layers. This can result in a surface that may be uneven or bumpy at the scale of the individual particles. However, in some examples the thermoplastic polymer particles can be small enough that the parts printed therefrom still have a smooth appearance when viewed by the human eye.

In some cases, partially fused particles at the edges of the 3- dimensional printed part can result in an appearance of uneven coloration of the part. As mentioned above, in some examples the fusing agent can include a carbon black pigment as an energy absorber. Such pigments can produce a dark black color in the 3-dimensional printed part. In some examples, the thermoplastic polymer powder can naturally have a light, white, or translucent color. Thus, when particles of the thermoplastic polymer powder that have not been printed with the carbon black pigment become embedded at the surface of the 3-dimensional printed part, the unprinted particles do not have the same black color. This can result in an uneven grayish appearance at the surfaces of the 3-dimensional printed part.

To improve the appearance of the 3-dimensional printed part, in some examples the detailing agent can include one or more dyes to color the thermoplastic polymer particles at the edges of the fused layers of the 3- dimensional part. In a particular example, the detailing agent can include a black dye and a cyan dye. The black dye and cyan dye can provide a black color to the portions of the powder bed that may be printed with the detailing agent, but can also provide the dual purpose of reducing splash when material such as powder and detailing agent is applied in subsequent layers. As a splash reducing compound, black dye or cyan dye could be used alone, or in combination, but in one example, the combination of black and cyan dyes can provide a color that more closely matches the color of the bulk color of a part prepared using carbon black fusing agent compared to using a black dye alone. At the same time, the dyes can absorb less electromagnetic energy compared to the carbon black pigment in the fusing agent. Thus, the detailing agent can still effectively cool the powder around the edges of each fused part layer. When particles of the powder printed with the detailing agent become embedded into the surface of the fused part, the black color of the particles can more closely match the black color of the fused part.

The use of such a detailing agent with a fusing agent and a thermoplastic polymer powder is shown in more detail in FIG. 2. Referring specifically to FIG. 2, a) shows a build platform or moveable floor 210 with a thin layer of thermoplastic polymer powder 215 spread thereon to form a powder bed. Droplets of a fusing agent 220a and deposited fusing agent 220b are shown in a portion of the powder bed that is to be fused. Droplets of a detailing agent 225a are deposited on already applied thermoplastic polymer powder, as shown at 225b, and also the detailing agent is applied at an edge of the portion to be fused. The detailing agent includes a splash reducing compound, such as an infrared-absorbing dye or a polymeric binder. As shown at b), after curing with a curing lamp (not shown, but shown in FIG. 1), the portion printed with the fusing agent fuses to form a fused part layer 235. In examples where a colorant is used as the splash reducing compound or where added colorant is used with the splash reducing compound, embedded particles 240a, 240b at the edge of the fused part layer contribute to the color of the outer surface of the part where the detailing agent contacts the fused part. Thus, in one example, the color of embedded particles may match or approximate or contribute to the color of the fused part layer. Additional loose particles 245 that were printed with the detailing agent may have a color from this process, but unprinted particles 250 outside the portions printed with the detailing agent retain their original color. Because of the presence of the splash reducing compound in the detailing agent, when a new layer of thermoplastic polymer powder 215 and detailing agent 225a is applied, the splash reducing compound in the detailing agent reduces powder splash. Furthermore, the thermoplastic polymer powder (with and without detailing agent) can be recycled for use in future builds and can be refreshed to some degree with fresh powder added to the used powder (unused in the part, but previously used during the build).

**As** mentioned, the fusing agent can include an energy absorber. The energy absorber typically is sensitive to electromagnetic radiation, such as infrared electromagnetic radiation, to heat up and cause the thermoplastic polymer powder to fuse therewith when exposed to the infrared electromagnetic radiation. In one example, the energy absorber can be carbon black, for example.

Examples of energy absorbers can include near-infrared energy absorbing dyes, near-infrared absorbing pigments, tungsten bronzes, molybdenum bronzes, metal nanoparticles, conjugated polymers, carbon black, or combinations thereof. By way of example but not intended to be limiting, carbon black pigment can be in the form of a dispersion of carbon black pigment particles. The dispersion stability and particle size of the carbon black pigment dispersion can each affect the jettability of the fusing agent. As used herein, "dispersion stability" refers to the ability of the carbon black pigment particles or other particles to remain dispersed without aggregating to form large aggregate particles that interfere with jetting. Dispersion stability can be measured in various ways. In one example, dispersion stability can be stated as a measurement of average pigment particle size overtime. Pigments with a high dispersion stability can have an average particle size that remains stable over time, while pigments with a low dispersion stability can show increased particle size overtime. In another example, dispersion stability can be measured by counting the number of particles with a particle size over a certain threshold particle size for a period of time. Pigments or other particles with low dispersion stability can show an increase in the number of large particles over time. When pigments or other energy absorber particles aggregate to form larger aggregate particles, the viscosity of the fusing agent can also increase. Therefore, the dispersion stability can also be measured by measuring viscosity of the fusing agent over time. In certain examples, the carbon black pigment can have a primary particle size from 2 nm to 50 nm. Additionally, the carbon black pigment can have an aggregate particle size from 60 nm to 200 nm.

In further examples, energy absorber particles, such as carbon black, can be dispersed by a dispersing agent. In certain examples, the dispersing agent can include a polymeric dispersing agent. Non-limiting examples of polymeric dispersing agents can include styrenes, maleic anhydrides, acrylics, or copolymers thereof. In particular examples, the dispersing agent can include a styrene acrylic copolymer such as Joncryl^{®} styrene acrylic resins available from BASF. In other particular examples, the dispersing agent can include a styrene maleic anhydride copolymer such as SMA^{®} styrene maleic anhydride resins available from TOTAL Cray Valley. Small molecule dipsersing agents can also be used. In some examples, the carbon black pigment can be reacted with a diazonium salt to produce carbon black pigment particles having an organic dispersing group attached to the carbon black pigment particles. In further examples, the carbon black pigment can be in the form of a pigment dispersion such as a CAB-O-JET^{®} carbon black pigment dispersion available from Cabot.

As another example of energy absorbers, near-infrared energy absorbing dyes include aminium dyes, tetraaryldiamine dyes, cyanine dyes, pthalocyanine dyes, dithiolene dyes, and others. In further examples, the energy absorber can be a near-infrared absorbing conjugated polymer such as poly(3,4-ethylenedioxythiophene)-poly(styrenesulfonate) (PEDOT:PSS), a polythiophene, poly(p-phenylene sulfide), a polyaniline, a poly(pyrrole), a poly(acetylene), poly(p-phenylene vinylene), polyparaphenylene, or combinations thereof.

As mentioned, the energy absorbers can also include a conjugated polymer. As used herein, "conjugated" refers to alternating double and single bonds between atoms in a molecule. Thus, "conjugated polymer" refers to a polymer that has a backbone with alternating double and single bonds. In many cases, the energy absorbers can have a peak absorption wavelength in the range of 800 nm to 1400 nm.

A variety of near-infrared pigments can also be used. Non-limiting examples can include phosphates having a variety of counterions such as copper, zinc, iron, magnesium, calcium, strontium, the like, and combinations thereof. Non-limiting specific examples of phosphates can include M₂P₂O₇, M₄P₂O₉, M₅P₂O₁₀, M₃(PO₄)₂, M(PO₃)₂, M₂P₄O₁₂, and combinations thereof, where M represents a counterion having an oxidation state of +2, such as those listed above or a combination thereof. For example, M₂P₂O₇ can include compounds such as Cu₂P₂O₇, Cu/MgP₂O₇, Cu/ZnP₂O₇, or any other suitable combination of counterions. It is noted that the phosphates described herein are not limited to counterions having a +2 oxidation state. Other phosphate counterions can also be used to prepare other suitable near-infrared pigments.

Additional near-infrared pigments can include silicates. Silicates can have the same or similar counterions as phosphates. One non-limiting example can include M₂SiO₄, M₂Si₂O₆, and other silicates where M is a counterion having an oxidation state of +2. For example, the silicate M₂Si₂O₆ can include Mg₂Si₂O₆, Mg/CaSi₂O₆, MgCuSi₂O₆, Cu₂Si₂O₆, Cu/ZnSi₂O₆, or other suitable combination of counterions. It is noted that the silicates described herein are not limited to counterions having a +2 oxidation state. Other silicate counterions can also be used to prepare other suitable near-infrared pigments.

In some examples, the fusing agent can include an energy absorber in an amount from 1 wt% to 20 wt%, 3 wt% to 15 wt%, or from 5 wt% to 10 wt%, with respect to the total weight of the fusing agent.

In some examples, additional pigments and/or dyes can be included as colorants to modify the color (or lack thereof) of the fusing agent. This may be particularly the case when the energy absorber in the fusing agent is not a colorant, e.g., carbon black energy absorber, though colorant can be added to any fusing agent whether or not the energy absorber is also a colorant. This added colorant, if present, can be included in an amount from 0.1 wt% to 10 wt% in the fusing agent. In one example, the colorant can be present in an amount from 0.5 wt% to 5 wt%. In another example, the colorant can be present in an amount from 2 wt% to 10 wt%. In some examples, the colored inks can be used to print 3D parts that retain the natural color of the polymer powder, or a polymer powder that may be already colored to some degree. Additionally, in one example, the fusing agent can include a white pigment such as titanium dioxide that can also impart a white color to the final printed part. Other inorganic pigments such as alumina or zinc oxide can also be used.

In some examples, the colorant can be a dye. The dye may be nonionic, cationic, anionic, or a mixture of nonionic, cationic, and/or anionic dyes. Specific examples of dyes that may be used include, but are not limited to, Sulforhodamine B, Acid Blue 113, Acid Blue 29, Acid Red 4, Rose Bengal, Acid Yellow 17, Acid Yellow 29, Acid Yellow 42, Acridine Yellow G, Acid Yellow 23, Acid Blue 9, Nitro Blue Tetrazolium Chloride Monohydrate or Nitro BT, Rhodamine 6G, Rhodamine 123, Rhodamine B, Rhodamine B Isocyanate, Safranine O, Azure B, and Azure B Eosinate, which are available from Sigma-Aldrich Chemical Company (St. Louis, Mo.). Examples of anionic, water-soluble dyes include, but are not limited to, Direct Yellow 132, Direct Blue 199, Magenta 377 (available from Ilford AG, Switzerland), alone or together with Acid Red 52. Examples of water-insoluble dyes include azo, xanthene, methine, polymethine, and anthraquinone dyes. Specific examples of water-insoluble dyes include Orasol^{®} Blue GN, Orasol^{®} Pink, and Orasol^{®} Yellow dyes available from Ciba-Geigy Corp. Black dyes may include, but are not limited to, Direct Black 154, Direct Black 168, Fast Black 2, Direct Black 171, Direct Black 19, Acid Black 1, Acid Black 191, Mobay Black SP, Acid Black 2, Pacified RB31, and Projet^{™} Fast Black 2 (FUJIFILM Imaging Colorants Inc.).

In other examples, the colorant can be a pigment. The pigment can be self-dispersed with a polymer, oligomer, or small molecule; or can be dispersed with a separate dispersant. Suitable pigments include, but are not limited to, the following pigments available from BASF: Paliogen^{®}) Orange, Heliogen^{®} Blue L 6901F, Heliogen^{®}) Blue NBD 7010, Heliogen^{®} Blue K 7090, Heliogen^{®} Blue L 7101F, Paliogen^{®}) Blue L 6470, Heliogen^{®}) Green K 8683, and Heliogen^{®} Green L 9140. The following black pigments are available from Cabot: Monarch^{®} 1400, Monarch^{®} 1300, Monarch^{®}) 1100, Monarch^{®} 1000, Monarch^{®}) 900, Monarch^{®} 880, Monarch^{®} 800, and Monarch^{®}) 700. The following pigments are available from CIBA: Chromophtal^{®}) Yellow 3G, Chromophtal^{®}) Yellow GR, Chromophtal^{®}) Yellow 8G, Igrazin^{®} Yellow 5GT, Igralite^{®} Rubine 4BL, Monastral^{®} Magenta, Monastral^{®} Scarlet, Monastral^{®} Violet R, Monastral^{®} Red B, and Monastral^{®} Violet Maroon B. The following pigments are available from Degussa: Printex^{®} U, Printex^{®} V, Printex^{®} 140U, Printex^{®} 140V, Color Black FW 200, Color Black FW 2, Color Black FW 2V, Color Black FW 1, Color Black FW 18, Color Black S 160, Color Black S 170, Special Black 6, Special Black 5, Special Black 4A, and Special Black 4. The following pigment is available from DuPont: Tipure^{®}) R-101. The following pigments are available from Heubach: Dalamar^{®} Yellow YT-858-D and Heucophthal Blue G XBT-583D. The following pigments are available from Clariant: Permanent Yellow GR, Permanent Yellow G, Permanent Yellow DHG, Permanent Yellow NCG-71, Permanent Yellow GG, Hansa Yellow RA, Hansa Brilliant Yellow 5GX-02, Hansa Yellow-X, Novoperm^{®} Yellow HR, Novoperm^{®} Yellow FGL, Hansa Brilliant Yellow 10GX, Permanent Yellow G3R-01, Hostaperm^{®} Yellow H4G, Hostaperm^{®} Yellow H3G, Hostaperm^{®} Orange GR, Hostaperm^{®} Scarlet GO, and Permanent Rubine F6B. The following pigments are available from Mobay: Quindo^{®} Magenta, Indofast^{®} Brilliant Scarlet, Quindo^{®} Red R6700, Quindo^{®} Red R6713, and Indofast^{®} Violet. The following pigments are available from Sun Chemical: L74-1357 Yellow, L75-1331 Yellow, and L75-2577 Yellow. The following pigments are available from Columbian: Raven^{®} 7000, Raven^{®} 5750, Raven^{®} 5250, Raven^{®} 5000, and Raven^{®} 3500. The following pigment is available from Sun Chemical: LHD9303 Black. Any other pigment and/or dye can be used that is useful in modifying the color of the above described fusing agent, and thus ultimately, the printed part.

The components of the fusing agent can be selected to give the fusing agent good fluid jetting performance and the ability to fuse the polymer bed material and/or color the polymer powder with good optical density. Thus, the fusing agent can include a liquid vehicle. In some examples, the liquid vehicle formulation can include one or more co-solvents present in total at from 20 wt% to 60 wt%, depending on the jetting architecture. Further, one or more non-ionic, cationic, and/or anionic surfactant can optionally be present, ranging from 0.01 wt% to 20 wt%. In one example, the surfactant can be present in an amount from 5 wt% to 20 wt%. The liquid vehicle can also include dispersants in an amount from 5 wt% to 20 wt%. The balance of the formulation can be purified water, and/or other vehicle components such as biocides, viscosity modifiers, materials for pH adjustment, sequestering agents, preservatives, and the like. In one example, the liquid vehicle can be predominantly water, e.g., more than 50 wt% water.

In some examples, the energy absorbers can be water-dispersible or water-soluble. Such energy absorbers can be used with an aqueous vehicle. Because the energy absorber can be dispersible or soluble in water, an organic co-solvent might not be present, as it may not be needed solubilize the energy absorber, though one could also be included. Therefore, in some examples the fluids can be substantially free of organic solvent. However, in other examples a co-solvent can be used to help disperse other dyes or pigments, or improve the jetting properties of the respective fluids. In still further examples, a non-aqueous vehicle can be used with an organic-soluble or organic-dispersible energy absorber.

In certain examples, a high boiling point co-solvent can be included in the various fluids. The high boiling point co-solvent can be an organic co-solvent that boils at a temperature higher than the temperature of the powder bed during printing. In some examples, the high boiling point co-solvent can have a boiling point above 250 °C. In still further examples, the high boiling point co-solvent can be present in the various fluids at a concentration from about 1 wt% to about 4 wt%.

Classes of co-solvents that can be used can include organic co-solvents including aliphatic alcohols, aromatic alcohols, diols, glycol ethers, polyglycol ethers, caprolactams, formamides, acetamides, and long chain alcohols. Examples of such compounds include primary aliphatic alcohols, secondary aliphatic alcohols, 1,2-alcohols, 1,3-alcohols, 1,5-alcohols, ethylene glycol alkyl ethers, propylene glycol alkyl ethers, higher homologs (C₆-C₁₂) of polyethylene glycol alkyl ethers, N-alkyl caprolactams, unsubstituted caprolactams, both substituted and unsubstituted formamides, both substituted and unsubstituted acetamides, and the like. Specific examples of solvents that can be used include, but are not limited to, 2-pyrrolidinone, N-methylpyrrolidone, 2-hydroxyethyl-2-pyrrolidone, 2-methyl-1,3-propanediol, tetraethylene glycol, 1,6-hexanediol, 1,5-hexanediol and 1,5-pentanediol.

In a particular example, the fusing agent can include 2-pyrrolidone as a co-solvent. In further examples, the fusing agent can include multiple co-solvents selected from 2-pyrrolidone, triethylene glycol, LEG-1, or combinations thereof. In a certain example, the co-solvent in the fusing agent can include 2-pyrrolidone present in an amount from 10 wt% to 40 wt% with respect to the total weight of the fusing agent and triethylene glycol in an amount from 5 wt% to 20 wt% with respect to the total weight of the fusing agent. In certain other examples, the co-solvent can include 2-pyrrolidone and triethylene glycol, wherein the 2-pyrrolidone may be included in a greater amount than the triethylene glycol.

Regarding the surfactant that may be present, one or more surfactant can be used, such as alkyl polyethylene oxides, alkyl phenyl polyethylene oxides, polyethylene oxide block copolymers, acetylenic polyethylene oxides, polyethylene oxide (di)esters, polyethylene oxide amines, protonated polyethylene oxide amines, protonated polyethylene oxide amides, dimethicone copolyols, substituted amine oxides, and the like. The amount of surfactant added to the fusing agent may range from 0.01 wt% to 20 wt%. In more specific examples, amount of surfactant in the fusing agent can be from 0.5 to 2.0 wt%. In even more specific examples, the amount of surfactant in the fusing agent can be from 0.75 wt% to 1.0 wt%. Suitable surfactants can include, but are not limited to, Surfynol^{®} SEF available from Air Products; TEGO^{®} Wet 510 available from Evonik Industries AG, TEGO Products; Capstone^{®} FS-35 available from DuPont; liponic esters such as Tergitol^{™} 15-S-12, Tergitol^{™} 15-S-7 available from Dow Chemical Company, LEG-1 and LEG-7; Triton^{™} X-100; Triton^{™} X-405 available from Dow Chemical Company ; and sodium dodecylsulfate. In a particular example, the fusing agent can include TEGO^{®} Wet 510 as a surfactant.

Consistent with the formulation of this disclosure, as mentioned, various other additives can be employed to improve certain properties of the fluid compositions for specific applications. Examples of these additives may be those added to inhibit the growth of harmful microorganisms. These additives may be biocides, fungicides, and other microbial agents, which can be used in various formulations. Examples of suitable microbial agents include, but are not limited to, NUOSEPT^{®} (Nudex, Inc.), UCARCIDE^{™} (Union carbide Corp.), VANCIDE^{®} (R.T. Vanderbilt Co.), PROXEL^{®} (ICI America), ACTICIDE^{®} B20 (THOR Specialties, Inc.), ACTICIDE^{®} M20 (THOR Specialties, Inc.), and combinations thereof. In a particular example, the fusing agent can include a mixture of ACTICIDE^{®} B20 and ACTICIDE^{®} M20. The biocide can be present in the fusing agent in an amount from 0.01 wt% to 1 wt%. In more specific examples, the biocide can be present in an amount from 0.1 wt% to 0.4 wt%.

Sequestering agents, such as EDTA (ethylene diamine tetra acetic acid), may be included to eliminate the deleterious effects of heavy metal impurities, and buffer solutions may be used to control the pH of the fluid. From 0.01 wt% to 2 wt%, for example, can be used. A chelating agent such as Trilon^{®} M available from BASF can also be included. In a particular example, a chelating agent can be included in an amount from 0.04 wt% to 0.1 wt%. Viscosity modifiers and buffers may also be present, as well as other additives to modify properties of the fluid as desired. Such additives can be present at from 0.01 wt% to 20 wt%.

Anti-kogation agents can be added to the fusing agent to reduce build-up of residues on the resistor element in a thermal fluid jet system used to print the fusing agent. In some examples, the anti-kogation agent can include phosphate esters, polyelectrolyte polymers, inorganic phosphate buffers such as Na₂HPO₃ or NaH₂PO₃, and combinations thereof. Suitable anti-kogation agents can include Crodafos^{™} O3A available from Croda; Cabosperse^{™} K-7028 polyacrylate available from Lubrizol; and combinations thereof. Sequestering and/or chelating agents can also be used for anti-kogation, such as EDTA or Trilon^{®} M available from BASF. In certain examples, the anti-kogation agents can be included in the fusing agent in an amount from 0.01 wt% to 1 wt%. In more specific examples, the total amount of anti-kogation agents in the fusing agent can be from 0.2 wt% to 0.6 wt% or from 0.4 wt% to 0.5 wt%.

In further examples of the presently disclosed technology, the fusing agent can be formulated for use at elevated temperatures, such as temperatures from 50 °C to 95 °C. In more specific examples, the fusing agent can be formulated for use at temperatures from 70 °C to 85 °C. Because the 3-dimensional printing processes described herein can involve heating polymer powder to fuse the polymer powder, the fusing agent can often be exposed to elevated temperatures. In some cases, the fusing agent can be contained in a reservoir that may be positioned near the powder bed. Thus, the fusing agent can be formulated to be stable and jettable within the above temperature ranges. Moreover, the fusing agent can be exposed to even higher temperatures after being printed onto the powder bed. The powder bed can often be preheated to a preheat temperature such as 140 °C to 160 °C, and the temperature of the powder bed during fusing can reach temperatures even as high as 220°C.
Therefore, the fusing agent can be formulated to be safe and effective when used at these high temperatures. In one example, the fusing agent can be substantially devoid of flammable co-solvents or other ingredients that would create a fire risk at the temperatures employed in the 3-dimensional printing process. For example, the fusing agent can be devoid of co-solvents or other ingredients with an autoignition temperature below 220 °C.

As mentioned above, the material sets according to the presently disclosed technology include a detailing agent. The detailing agent can be formulated for use in the same systems as the fusing agent described above. For example, the detailing agent and fusing agent can each be formulated for printing from a fluid jet printhead. Thus, the detailing agent can include any of the various ingredients and additives described above with respect to the fusing agent. However, the detailing agent can be devoid of the energy absorber used in the fusing agent.

In some examples, the detailing agent can be formulated to provide a cooling effect on portions of the thermoplastic polymer powder bed onto which the detailing agent may be applied. This cooling effect can be achieved, for example, by evaporation of water and/or co-solvents in the detailing agent. While the fusing agent can also produce an initial cooling effect due to evaporation of water and co-solvents in the fusing agent, the fusing agent can produce a net heating effect due to the energy absorber present in the fusing agent. The detailing agent can be devoid of the energy absorber used in the fusing agent, and therefore the detailing agent can have a net cooling effect. When the detailing agent may be printed onto the powder bed around the edges of the portion printed with the fusing agent, the respective cooing and heating effects of the detailing agent and fusing agent, respectively, can produce a sharp boundary between the fused portion and the unfused portions of the powder bed. Without the detailing agent, in some cases thermal bleed from the fused portion can result in partial fusing of the thermoplastic polymer particles around the edges of the fused portion. This can result in caking of the particles around the finished 3-dimensional printed part and low part quality.

As mentioned above, in some examples the detailing agent can be devoid of energy absorber. However, it is noted that most if not all materials absorb some amount of electromagnetic energy and convert the energy to heat. Therefore, as used herein, "devoid of energy absorbers" does not imply that the detailing agent is devoid of any ingredients that can absorb electromagnetic energy in any amount. Rather, the detailing agent can be devoid of the specific energy absorbers disclosed as being optionally included in the fusing agent for the purpose of absorbing electromagnetic energy for fusing. In fact, in some examples, some absorption of electromagnetic energy can be used to provide anti-splashing properties of the detailing agent. For example, a dye that absorbs some infrared electromagnetic energy can cause the detailing agent to slightly harden or solidify (not to the extent of the fused part) in the region where the detailing agent droplets are deposited, thereby increasing the structural integrity of that region and thereby resisting the tendency of free flowing powder particles to be readily splashed by the incoming droplets of detailing agent. Alternatively, rather than an infrared-absorbing dye, a binder can be included as a splash reducing compound that acts to congeal or bind enough to minimize splash from subsequently applied layers of thermoplastic polymer powder and detailing agent.

**As** mentioned, in certain examples, the detailing agent can include one or more dyes to improve the coloration at surfaces of the 3-dimensional printed part, or can include a binder, each of which can reduce splash. In a specific example, the detailing agent can include a black dye and/or a cyan dye. As a type of colorant, dyes tend to absorb more electromagnetic energy than some other ingredients. However, the dyes used in the detailing agent can be absorb relatively less energy compared to the carbon black pigments or other energy absorbers included in the fusing agent. Therefore, they would not fully fuse, but would solidify or congeal enough to reduce powder splash. Furthermore, the detailing agent often can include dyes at a lower concentration splash reducing compound compared to the concentration of the energy absorber in the fusing agent. Thus, for example in the case of the use of dyes for the splash reducing compound, the amount of energy absorbed by the dyes in the detailing agent can be much less than the amount of energy absorbed by the carbon black pigment in the fusing agent. In a particular example, the dyes in the detailing agent can be present in a sufficiently small amount that the detailing agent produces a net cooling effect even when the dyes absorb some electromagnetic energy during curing the of the powder bed.

As mentioned, the splash reducing compound can be an infrared-absorbing dye or a binder. However, in some examples, splash reduction can be further enhanced by including both an infrared-absorbing dye and polymeric binder.

The detailing agent can also include one or more co-solvents of the same types described above with respect to the fusing agent. In a particular example, the detailing agent can include one or more co-solvents including tripropylene glycol methyl ether, triethylene glycol, 2-pyrrolidone, or combinations thereof. In a certain example, the detailing agent can include a combination of two of these organic co-solvents. The organic co-solvent can be included in an amount from 10 wt% to 25 wt% (in combination) with respect to the total weight of the detailing agent.

In certain examples, a material set can include a fusing agent and a detailing agent, wherein the detailing agent includes a smaller concentration of organic co-solvent compared to the fusing agent. In some examples, the detailing agent can include a greater concentration of water than the fusing agent. In one example, the detailing agent can include water in an amount from 70 wt% to 90 wt% with respect to the total weight of the detailing agent. Using a greater amount of water in the detailing agent can, in some cases, improve the cooling ability of the detailing agent. Conversely, using a greater amount of co-solvent can reduce the initial cooling caused by evaporation of water from the fusing agent, so that the fusing agent can have a greater heating effect overall.

As mentioned above, the detailing agent can include a black dye and a cyan dye as the infrared-absorbing dye to improve coloration of the surfaces of the 3-dimensional printed part, and/or can include polymeric binder, both of which contribute to powder splash reduction. In certain examples, the energy absorber can be present in an amount from 1 wt% to 6 wt% with respect to the total weight of the detailing agent. If infrared-absorbing dyes are used, black dyes can produce coloration in in the thermoplastic polymer particles that may slightly different than the color of the fused polymer that incorporates the carbon black pigment of the fusing agent. For example, some black dyes can produce a brownish color or purplish color or another color other than neutral black when printed onto polymer powder. Accordingly, in some examples cyan dye can be included in the detailing agent to adjust the color as well. The cyan dye can adjust the color to a more neutral black color. Other dyes can also be added to adjust the color to match the black color of the fused 3-dimensional printed part. Other color combinations can also be used, depending on the color of the fusing agent and/or the thermoplastic polymer powder combination.

Black dyes that can be used as the energy absorber in the detailing agent can include Direct Black 154, Direct Black 168, Fast Black 2, Direct Black 171 , Direct Black 19, Acid Black 1, Acid Black 191 , Mobay Black SP, Acid Black 2, Pacified RB31 , Projet^{™} Fast Black 2 (FUJIFILM Imaging Colorants Inc.), or combinations thereof. In a more specific example, the black dye can include Pacified RB31 , Projet^{™} Fast Black 2, or combinations thereof. Cyan dyes that can be used include Azure B, Azure B Eosinate (Sigma-Aldrich Chemical Company), Direct Blue 199 (Ilford AG, Switzerland), Orasol^{®} Blue (Ciba-Geigy Corp.), Acid Blue 9, or combinations thereof. In a particular example, the cyan dye can be Acid Blue 9.

In additional examples of the material sets according to the present technology, the material sets can include a thermoplastic polymer powder. The thermoplastic polymer powder can have an average particle size from 10 µm (microns) to 200 µm (microns). As used herein, "average" with respect to properties of particles refers to a number average unless otherwise specified. Accordingly, "average particle size" refers to a number average particle size. Additionally, "particle size" refers to the diameter of spherical particles, or to the longest dimension of non- spherical particles. In further detail, and in accordance with certain specific examples, the particle size distribution of the thermoplastic polymer powder can be as follows: D50 can be from 45 µm (microns) to 75 µm (microns), from 55 µm (microns) to 65 µm (microns), or about 60 µm; D10 can be from 10 µm (microns) to 50 µm (microns), from 30 µm (microns) to 40 µm (microns), or about 35 µm (microns); and D90 can be from 75 µm (microns) to 150 µm (microns), from 80 µm (microns) to 95 µm (microns), or about 90 µm (microns). "D50" is defined as the median weight. "D10" is defined as the tenth-percentile by weight of powder that is below a given particle size, e.g., from 20 µm (microns) to 50 µm (microns). "D90" is defined as the ninetieth-percentile by weight of powder that is below a given particle size, e.g., 75 µm (microns) to 100 µm (microns).

In certain examples, the thermoplastic polymer particles can have a variety of shapes, such as substantially spherical particles or irregularly-shaped particles. In a particular example, the thermoplastic polymer powder can have a sphericity of at least 0.7. As used herein, "sphericity" refers to a ratio of the surface area of a sphere having the same volume as a particle to the actual surface area of the particle. Additionally, in some examples the thermoplastic polymer particles can have a BET surface area of less than 15 m²/g.

In some examples, the polymer powder can be capable of being formed into 3-dimensional printed parts with a resolution of 10 to 200 µm (microns). As used herein, "resolution" refers to the size of the smallest feature that can be formed on a 3-dimensional printed part. The polymer powder can form layers from about 10 to about 200 µm (microns) thick, allowing the fused layers of the printed part to have roughly the same thickness. This can provide a resolution in the z- axis direction of about 10 to about 200 µm (microns). The polymer powder can also have a sufficiently small particle size and sufficiently regular particle shape to provide about 10 to about 200 µm (micron) resolution along the x-axis and y-axis.

In some examples, the thermoplastic polymer powder can be colorless. For example, the polymer powder can have a white, translucent, or transparent appearance.

The thermoplastic polymer powder can have a fusing temperature from about 70°C to about 350°C. In further examples, the polymer can have a fusing temperature from about 150°C to about 200°C. As used herein, "fusing temperature" refers to the lowest temperature at which particles of the thermoplastic polymer powder fuse together to form a solid object. In some cases, this temperature can be referred to as a melting temperature, softening temperature, or flow temperature. Not all thermoplastic polymers have a specific melting temperature, as some polymers experience a gradual reduction in viscosity with increasing temperature. With such polymers, the particles can begin to flow sufficiently to fuse with neighboring polymer particles at the fusing temperature.

A variety of thermoplastic polymers with fusing temperatures in these ranges can be used. For example, the polymer powder can be a polyamide-6 powder, polyamide-9 powder, polyamide-11 powder, polyamide-12 powder, polyamide-66 powder, polyamide-612 powder, polyethylene powder, thermoplastic polyurethane powder, polypropylene powder, polyester powder, polycarbonate powder, polyether ketone powder, polyacrylate powder, polystyrene powder, or combinations thereof.

In a specific example, the polymer powder can be a polyamide powder such as polyamide-11 or polyamide-12, which can have a melting point from about 160 °C to about 200 °C. In some examples, the polyamide powder can be a semi-crystalline powder having a degree of crystallinity from 10% to 90%, which can be measured using differential scanning calorimetry. The polyamide powder can have a recrystallization temperature from 130 °C to 160 °C. Additionally, the polyamide powder can have an enthalpy of fusion from 80 J/g to 130 J/g. These thermoplastic polymer powder values are provided by way of example and are not intended to be limiting. Values outside of these ranges can also be used with success.

In further examples, the polyamide powder can have a number average molecular weight Mₙ from 10,000 to 500,000 and a polydispersity index (defined as M_{w}/Mₙ) from 1 to 5. Additionally, the molecular weight of polyamide powder can be characterized using solution viscosity as a proxy for molecular weight. "Solution viscosity" is defined by combining 0.5 wt% polyamide-12 powder with 99.5 wt% M-cresol and measuring the viscosity of the admixture. Further details for determining solution viscosity under this measurement protocol are described in International Standard ISO 307, Fifth Edition, 2007-05-15. In some examples, the polyamide powder used in the material sets of the presently disclosed technology can have a solution viscosity from 1.4 to 2.0.

**The** thermoplastic polymer particles can also in some cases be blended with a filler. The filler can include inorganic particles such as alumina, silica, glass particles, metal particles, or ceramic particles, e.g. glass beads, steel balls, or metal grains, or other pigments, e.g. transition metal oxides, or combinations thereof. When the thermoplastic polymer particles fuse together, the filler particles can become embedded in the polymer, forming a composite material. In some examples, the filler can include a free-flow agent, anti-caking agent, or the like. Such agents can prevent packing of the powder particles, coat the powder particles and smooth edges to reduce inter-particle friction, and/or absorb moisture. In some examples, a weight ratio of thermoplastic polymer particles to filler particles can be from 99.9:0.1 to 1:2, from 99: 1 to 1:1 , or from 5:1 to 1:1. The filler particles can have a variety of particle sizes depending on the type of filler material. In some examples, the filler particles can have an average particle size from 5 nm to 200 µm (microns), from 10 nm to 150 µm (microns), or from 100 nm to 100 µm (microns).

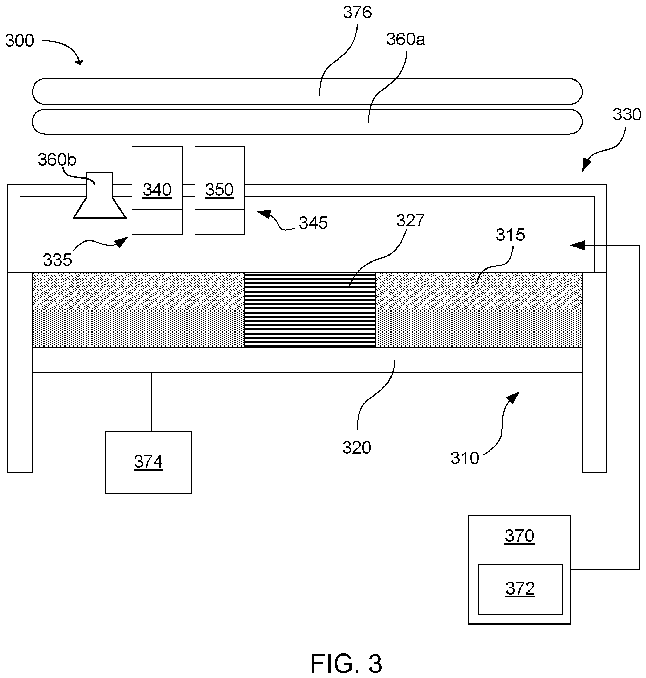

In addition to the material sets described above, the present technology also encompasses 3-dimensional printing systems that include the material sets. An example of a 3-dimensional printing system is shown in FIG. 3. The system 300 includes a powder bed 310 including a powder bed material 315, which includes the thermoplastic polymer powder described herein and has an average particle size from 10 µm (microns) to 200 µm (microns). In the example shown, the powder bed has a build platform or moveable floor 320 that allows the powder bed to be lowered after each layer of the 3-dimensional part is printed. The 3-dimensional part 327 is shown after printing the fusing agent 340 on the powder bed material. The system also includes a fluid jet printer 330 that includes a first fluid jet pen 335 in communication with a reservoir of the fusing agent 340. The first fluid jet pen is configured to print the fusing agent onto the powder bed. A second fluid jet pen 345 is in communication with a reservoir of a detailing agent 350. The second fluid jet pen is configured to print the detailing agent onto the powder bed. In some examples, the 3-dimensional printing system can also include additional fluid jet pens in communication with a reservoir of fluid to provide other colors and/or functionality.

After the fusing agent 340 has been printed onto the powder bed material 315, a fusing radiation source, such as a fusing lamp 360a or 360b, can be used to expose the powder bed to electromagnetic radiation sufficient to fuse the powder that has been printed with the fusing agents. Fusing lamp 360a may be a stationary fusing lamp that rests above the powder bed, and fusing lamp 360b may be carried on a carriage with the fluid jet pens 335, 345. To print the next layer, the moveable floor is lowered and a new layer of powder bed material is added above the previous layer. Unused powder bed material, such as that shown at 315, is not used to form the 3-dimensional part, and thus, can be recycled for future use, even though the detailing agent may be printed within a portion of the unused powder (unused with respect to the printed part). Recycling can include refreshing the "unused" powder bed material with a relatively small percentage of fresh powder bed material, e.g., as little as up to 20 wt%, up to 10 wt%, or up to 5 wt%.

**To** achieve good selectivity between the fused and unfused portions of the powder bed, the fusing agents can absorb enough electromagnetic radiation or energy to boost the temperature of the thermoplastic polymer powder above the melting or softening point of the polymer, while unprinted portions of the powder bed remain below the melting or softening point. Thus, as mentioned, the 3-dimensional printing system can include preheaters for preheating the powder bed material, to a temperature near the melting or softening point. In one example, the system can include a preheater(s) to heat the powder bed material prior to printing. For example, the system may include a print bed heater 374 to heat the print bed to a temperature from 100 °C to 200 °C, or from 120 °C to 160 °C. The system can also include a supply bed or container 370 which also includes a supply heater 372 at a location where polymer particles may be stored before being spread in a layer onto the powder bed 310. The supply bed or container can utilize the supply heater to heat the supply bed or container to a temperature from 90 °C to 180 °C. Thus, when an overhead heating source 376, e.g., heating lamps, may be used to heat up the powder bed material to a printing temperature, the typical minimum increase in temperature for printing can be carried out quickly, e.g., up to about 160 °C to 220 °C. To be clear, the overhead heating source used to heat the powder bed material for printing is typically a different energy source than the electromagnetic radiation source, e.g., fusing lamp 360a or 360b, used to thermally activate the energy absorber, though these energy sources could be the same depending on the energy absorber and powder bed material chosen for use. Either the heating source or the electromagnetic energy source can act on the splash reducing compound in the detailing agent to cause the consistency of the detailing agent to ameliorate or reduce splash when subsequently applied thermoplastic polymer powder and detailing agent is applied for the next layer of the build. In some instances, the heating source and/or the electromagnetic radiation source may not contribute to the splash reducing properties of the detailing agent, and it the composition itself that provides this benefit without the assistance of other energy sources. Either way, splash can be reduced by the addition of the splash reducing compound in the detailing agent.

Suitable fusing radiation sources or lamps for use in the 3-dimensional printing system can include commercially available infrared lamps and halogen lamps. The fusing lamp can be a stationary lamp or a moving lamp. For example, the lamp can be mounted on a track to move horizontally across the powder bed. Such a fusing lamp can make multiple passes over the bed depending on the amount of exposure needed to fuse each printed layer. The fusing lamp can be configured to irradiate the entire powder bed with a substantially uniform amount of energy. This can selectively fuse the printed portions with fusing agents leaving the unprinted portions of the powder bed material below the fusing temperature of the polymer powder.

Depending on the amount of energy absorber present in the polymer powder, the absorbance of the energy absorber, the preheat temperature, and the fusing temperature of the polymer powder, an appropriate amount of irradiation can be supplied from the fusing radiation source or lamp. In some examples, the fusing lamp can irradiate individual layers from about 0.5 to about 10 seconds per pass.

It is noted that, as used in this specification and the appended claims, the singular forms "a," "an," and "the" include plural referents unless the context clearly dictates otherwise.

As used herein, "liquid vehicle" refers to a liquid in which additives may be placed to form fluid jettable formulations, such as fusing agent, detailing agents, inks, functional fluids, etc. A wide variety of liquid vehicles may be used in accordance with the technology of the present disclosure. Such liquid or ink vehicles may include a mixture of a variety of different agents, including, surfactants, solvents, co-solvents, anti-kogation agents, buffers, biocides, sequestering agents, viscosity modifiers, surface- active agents, water, etc. Though not part of the liquid vehicle *per se*, in addition to the colorants and energy absorbers, the liquid vehicle can carry solid additives such as polymers, latexes, UV curable materials, plasticizers, salts, etc.

The term "fluid" herein does not exclude solid additives that may be suspended therein, as fluid generally includes both solutions and fine dispersions, such as in fusing agents, detailing agents, inks, functional fluids, etc.

As used herein, "colorant" can include dyes and/or pigments.

As used herein, "dye" refers to compounds or molecules that absorb electromagnetic radiation or certain wavelengths thereof. Dyes can impart a visible color to an ink if the dyes absorb wavelengths in the visible spectrum.

As used herein, "pigment" generally includes pigment colorants, magnetic particles, aluminas, silicas, and/or other ceramics, organo-metallics or other opaque particles, whether or not such particulates impart color. Thus, though the present description primarily exemplifies the use of pigment colorants, the term "pigment" can be used more generally to describe not only pigment colorants, but other pigments such as organometallics, ferrites, ceramics, etc. In one specific aspect, however, the pigment is a pigment colorant.

As used herein, "soluble," refers to a solubility percentage of more than 5 wt%.

As used herein, "fluid jetting" or "jetting" refers to compositions that may be ejected from jetting architecture, such as inkjet architecture or fluid jet architecture, e.g., thermal or piezo architecture. Additionally, such architecture can be configured to print varying drop sizes such as less than 10 picoliters, less than 20 picoliters, less than 30 picoliters, less than 40 picoliters, less than 50 picoliters, etc.

The term "thermoplastic polymer powder" refers to relatively fine thermoplastic particles, or particles coated with thermoplastic polymer, e.g., glass beads coated with nylon-12 other thermoplastic polymer, with an average particle size from 10 µm to 200 µm. The thermoplastic polymer powder or polymer coating can have a melting or softening point from about 70°C to about 350°C, and can include polymers such as nylons or polyamides, polyethylenes, thermoplastic polyurethanes, polypropylenes, polyesters, polycarbonates, polyether ketones, polyacrylates, polystyrenes, etc. The term "powder" can be used interchangeably with "particle" or "particulate."

The term "infrared-absorbing dye" refers to dyes that absorb electromagnetic radiation in the infrared and/or near infrared spectra. These dyes can be colorless in the visible spectrum, or can be colored. For example, a black dye may also be infrared-absorbing dye.

As used herein, the term "substantial" or "substantially" when used in reference to a quantity or amount of a material, or a specific characteristic thereof, refers to an amount that is sufficient to provide an effect that the material or characteristic was intended to provide. The exact degree of deviation allowable may in some cases depend on the specific context.

As used herein, the term "about" is used to provide flexibility to a numerical range endpoint by providing that a given value may be "a little above" or "a little below" the endpoint. The degree of flexibility of this term can be dictated by the particular variable and determined based on the associated description herein.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary.

Concentrations, amounts, and other numerical data may be expressed or presented herein in a range format. It is to be understood that such a range format is used merely for convenience and brevity and thus should be interpreted flexibly to include not only the numerical values explicitly recited as the limits of the range, but also to include individual numerical values or sub-ranges encompassed within that range as if each numerical value and sub-range is explicitly recited. As an illustration, a numerical range of "about 1 wt% to about 5 wt%" should be interpreted to include not only the explicitly recited values of about 1 wt% to about 5 wt%, but also include individual values and sub-ranges within the indicated range. Thus, included in this numerical range are individual values such as 2, 3.5, and 4 and sub-ranges such as from 1-3, from 2-4, and from 3-5, etc. This same principle applies to ranges reciting only one numerical value. Furthermore, such an interpretation should apply regardless of the breadth of the range or the characteristics being described

### EXAMPLE

The following illustrates several examples of the present disclosure. However, it is to be understood that the following is only illustrative of the application of the principles of the present disclosure. Numerous modifications and alternative compositions, methods, and systems may be devised without departing from the scope of the appended claims.

In accordance with the present disclosure, nine detailing agent formulations (Formulations 1-4, 6, 7 and 11-13) were prepared having splash reducing compounds contained therein, and were compared to two control detailing agent formulations (Control 1 for Formulations 1-4, 6 and 7; and Control 2 for Formulations 11-13). Four other formulations were prepared without splash reducing compounds (Formulations 5, and 8-10), which were also compared to the Control 1 to further verify the splash reducing properties of the presence of the splash reducing compounds. All of these formulations are shown in Tables 1-3:

**Table 1**

| **Formulation** | **1 (wt%)** | **2 (wt%)** | **3 (wt%)** | **4 (wt%)** | **5 (wt%)** | **Control 1 (wt%)** |
|---|---|---|---|---|---|---|
| ¹Joncryl^{®} 671 (10wt% styrene-acrylic resin solution) | 2 | - | - | 2 | - | - |
| ¹Joncryl^{®} 683 (10 wt% styrene-acrylic resin solution) | - | 2 | - | - | - | - |
| ¹PU RW-4601 (20 wt% polyurethane resin solution) | - | - | 2 | - | - | - |
| Cabosperse^{®} K7028 (5.5 wt% polyacrylate solution) | - | - | - | 0.05 | 0.05 | - |
| LEG-1 | - | - | - | 0.75 | | - |
| Surfynol^{®} SEF | 0.85 | 0.85 | 0.85 | 0.85 | 0.85 | 0.85 |
| Tripropyleneglycol methyl ether | 10.5 | 10.5 | 10.5 | 10.5 | 10.5 | 15 |
| Crodafos^{®} N3 acid | 0.35 | 0.35 | 0.35 | 0.35 | 0.35 | 0.5 |
| Trilon^{®} M | - | - | - | - | - | 0.05 |
| Proxel^{®} GXL | 0.13 | 0.13 | 0.13 | 0.13 | 0.13 | 0.18 |
| Kordex^{®} ML | 0.1 | 0.1 | 0.1 | 0.1 | 0.1 | 0.14 |
| DI Water | 86.08 | 86.08 | 86.08 | 85.28 | 88.03 | 82.28 |
| | | | | | | |
| **Mean Splash Severity** | **5.35** | **5.35** | **5.83** | **6.32** | **7.89** | **7.65** |
| **Mean Splash Severity Compared to Control 1** | **2.3** | **2.3** | **1.81** | **1.32** | **-0.24** | **N/A** |

| | | | | | | |
|---|---|---|---|---|---|---|
| ¹Splash reducing compound | | | | | | |

**Table 2**

| **Formulation** | **6 (wt%)** | **7 (wt%)** | **8 (wt%)** | **9 (wt%)** | **10 (wt%)** | **Control 1 (wt%)** |
|---|---|---|---|---|---|---|
| ¹Joncryl^{®} 671 (10wt% styrene-acrylic resin solution) | 2 | - | - | - | - | - |
| Cabosperse^{®} K7028 (5.5 wt% solution | 0.05 | - | - | - | - | - |
| LEG-1 | 0.75 | - | - | - | - | - |
| ¹Acid Blue-9 | - | 0.4 | - | - | - | - |
| ¹Pacified Reactive Black 31 Liquid | - | 2.25 | - | - | - | - |
| Surfynol^{®} SEF | 0.75 | 0.85 | 0.75 | | 0.75 | 0.85 |
| Teqowet^{®} 510 | - | - | - | 0.85 | - | - |
| 2-Pyrrolidinone | 10 | 4 | | | 10 | |
| Tripropyleneglycol methyl ether | 10.5 | - | 10.5 | 10.5 | 10.5 | 15 |
| Triethylene glycol | - | 11 | - | - | - | - |
| Crodafos^{®} N3 acid | 0.35 | 0.5 | 0.35 | 0.35 | 0.35 | 0.5 |
| Trilon^{®} M | - | 0.05 | - | - | - | 0.05 |
| Proxel^{®} GXL | 0.13 | 0.18 | 0.13 | 0.13 | 0.13 | 0.18 |
| Kordex^{®} ML | 0.1 | 0.14 | 0.1 | 0.1 | 0.1 | 0.14 |
| DI Water | 75.38 | 80.63 | 88.18 | 88.08 | 78.18 | 82.28 |
| | | | | | | |
| **Mean Splash Severity** | **5.85** | **1.59** | **8.36** | **8.59** | **7.09** | **7.65** |
| **Mean Splash Severity Compared to Control 1** | **1.8** | **6.05** | **-0.72** | **-0.95** | **0.55** | **N/A** |

| | | | | | | |
|---|---|---|---|---|---|---|
| ¹Splash reducing compound | | | | | | |

**Table 3**

| **Formulation** | **11 (wt%)** | **12 (wt%)** | **13 (wt%)** | **Control 2 (wt%)** |
|---|---|---|---|---|
| ¹Joncryl^{®} 683 | 2 | - | 2 | - |
| (10 wt% styrene-acrylic resin solution) | | | | |
| ¹Acid Blue-9 | 0.4 | 0.4 | - | - |
| ¹Pacified Reactive Black 31 Liquid | 2.25 | 2.25 | - | - |
| Surfynol^{®} SEF | 0.85 | 0.85 | 0.85 | 0.85 |
| Crodafos^{®} N3 acid | 0.5 | 0.5 | 0.5 | 0.5 |
| 2-Pyrrolidinone | 4 | 4 | 4 | 4 |
| Triethylene glycol | 11 | 11 | 11 | 11 |
| Trilon^{®} M | 0.05 | 0.05 | 0.05 | 0.05 |
| Proxel^{®} GXL | 0.18 | 0.18 | 0.18 | 0.18 |
| Kordex^{®} ML | 0.14 | 0.14 | 0.14 | 0.14 |
| DI Water | 78.63 | 80.63 | 81.28 | 83.28 |
| | | | | |
| **Mean Splash Severity** | **3.5** | **4.38** | **5.13** | **8** |
| **Mean Splash Severity Compared to Control 2** | **4.5** | **3.63** | **2.88** | **N/A** |

| | | | | |
|---|---|---|---|---|
| ¹Splash reducing compound | | | | |

In Tables 1-3 above, Joncryl^{®} products available from BASF. Surfynol^{®} SEF is available from Air Products. RW-4601 is from DIC Products. Capstone^{®} FS-35 is available from DuPont. Crodafos^{™} is available from Croda. Trilon^{®} M is available from BASF. Proxel^{®} GXL is available from Arch Chemicals. Kordex^{®} ML is available from the Dow Chemical Company. Tegowet^{®} 510 is available from Evonik. Cabosperse^{®} K7028 is available from Cabot Corporation.

Beneath each of the formulations, a Mean Splash Severity value is provided as well as a Mean Splash Severity Compared to Control. In Tables 1 and 2, Formulations 1-10 are compared to Control 1. Formulations 1-4, 6 and 7 each included a reducing compound and Formulations 5, and 8-10 did not. In Table 3, Formulations 11-13 were compared to Control 2. Control 2 likewise does not include a splash reducing compound, whereas Formulations 11-13 each include one or two splash reducing compound(s). Mean Splash Severity was determined by judging the amount and extent of powder that was splashed up from the powder bed using high speed video micrographic recordings of printing events. In this metric, the lower the number the better, as it indicated a lower degree of splash. The amount of splashing in splashing event recordings were compared to standard "anchor" images with a low (score of 2) and a high (score of 10) amount of splashing. Mean Splash Severity Compared to Control was determined by comparing the splash score to the respective Control and providing a difference. In this metric, the higher the value, the better as it indicated a greater improvement over the respective Control.

In Tables 1 and 2, general improvement was achieved in Formulations 1-4 and 6-7. The best results achieved occurred when using the infrared-absorbing dyes, as shown in Formula 7. In Table 3, As can be seen by the data, the very best results were achieved by including both an infrared-absorbing dye and a polymeric binder as co-splash reducing compounds (See Formulation 11), but each splash reducing compound used alone produced improved results as well (See Formulations 12 and 13).

## Claims

1. A method of printing a 3-dimensional part, comprising:
applying a first layer of thermoplastic polymer powder to a powder bed;
applying a fusing agent to a first portion of the first layer;
applying a detailing agent to a second portion of the first layer immediately adjacent to the first portion, wherein the detailing agent comprises a splash reducing compound comprising an infrared-absorbing dye, a polymeric binder, or combination thereof.;
exposing the powder bed with electromagnetic energy sufficient to fuse the fusing agent with the thermoplastic polymer powder at the first portion;
applying a second layer of thermoplastic polymer powder to the powder bed on top of the first layer; and
applying detailing agent to the second portion of the thermoplastic polymer without substantial powder splash where the thermoplastic polymer powder is not fused.

2. The method of claim 1, wherein the splash reducing compound comprises polymeric binder that comprises a styrene-acrylic resin, a polyurethane, or mixtures thereof.

3. A material set for use in the method of claim 1 or 2, comprising:
a detailing agent, comprising:
water,
a splash reducing compound comprising an infrared absorbing dye and/or a polymeric binder that comprises a styrene-acrylic resin, a polyurethane, or mixtures thereof,
and
a water-soluble co-solvent; and
a fusing agent, comprising:
water, and
an energy absorber.

4. The material set of claim 3, wherein the splash reducing compound comprises black infrared-absorbing dye.

5. The material set of claim 3, wherein the splash reducing compound comprises cyan or blue infrared-absorbing dye.

6. The material set of claim 3, wherein the splash reducing compound comprises a black infrared-absorbing dye and a cyan or blue infrared-absorbing dye at a weight ratio from 3:1 to 10:1.

7. The material set of claim 3, wherein the splash reducing compound comprises polymeric binder that comprises a styrene-acrylic resin, a polyurethane, or mixtures thereof.

8. The material set of claim 3, wherein the detailing agent includes the water in an amount from 70 wt% to 90 wt% and one or more water soluble co-solvent at from greater than 10 wt% to less than 30 wt%.

9. The material set of claim 3, wherein the energy absorber comprises a carbon black pigment.

10. The material set of claim 3, further comprising a thermoplastic polymer powder.

11. The material set of claim 10, wherein the thermoplastic polymer powder has an average particle size from 10 µm (microns) to 200 µm (microns).

12. The material set of claim 10, wherein the thermoplastic polymer powder comprises polyamide-6 powder, polyamide-9 powder, polyamide-11 powder, polyamide-12 powder, polyamide-66 powder, polyamide-612 powder, polyethylene powder, thermoplastic polyurethane powder, polypropylene powder, polyester powder, polycarbonate powder, polyether ketone powder, polyacrylate powder, polystyrene powder, or a combination thereof.

13. A 3-dimensional printing system, comprising:
a powder bed comprising a thermoplastic polymer powder;
a fluid jet printer comprising:
a first fluid ejector in communication with a reservoir of a detailing agent, wherein the first fluid ejector is configured to print the detailing agent onto the powder bed, wherein the detailing agent comprises water; a splash reducing compound comprising an infrared-absorbing dye, and/or a polymeric binder that comprises a styrene-acrylic resin, a polyurethane, or mixtures thereof; and a water-soluble co-solvent;
a second fluid ejector in communication with a reservoir of a fusing agent, wherein the second fluid ejector is configured to print the fusing agent onto the powder bed, wherein the fusing agent includes an energy absorber;
and
a fusing radiation source to expose the powder bed to electromagnetic radiation sufficient to fuse thermoplastic polymer powder that has been printed with the fusing agent.

14. The 3-dimensional printing system of claim 13, wherein the fusing radiation source is also sufficient to enhance the splash reducing properties of the splash reducing compound with respect to a subsequently applied layer of thermoplastic polymer powder.

## Patentansprüche

1. Verfahren zum Drucken eines 3-dimensionalen Teils, das Folgendes umfasst:
Aufbringen einer ersten Schicht aus thermoplastischem Polymerpulver auf ein Pulverbett;
Aufbringen eines Schmelzmittels auf einen ersten Abschnitt der ersten Schicht;
Aufbringen eines Detaillierungsmittels auf einen zweiten Abschnitt der ersten Schicht unmittelbar angrenzend an den ersten Abschnitt, wobei das Detaillierungsmittel eine Spritzreduktionsverbindung umfasst, die einen Infrarot-Absorptionsfarbstoff, ein polymeres Bindemittel oder eine Kombination davon umfasst;
Aussetzen des Pulverbetts mit elektromagnetischer Energie, die ausreicht, um das Schmelzmittel mit dem thermoplastischen Polymerpulver an dem ersten Abschnitt zu schmelzen;
Aufbringen einer zweiten Schicht aus thermoplastischem Polymerpulver auf das Pulverbett auf der ersten Schicht; und
Aufbringen von Detaillierungsmittel auf den zweiten Abschnitt des thermoplastischen Polymers ohne wesentlichen Pulverspritzer, wobei das thermoplastische Polymerpulver nicht verschmolzen ist.

2. Verfahren nach Anspruch 1, wobei die Spritzreduktionsverbindung polymeres Bindemittel umfasst, das ein Styrol-Acrylharz, ein Polyurethan oder Mischungen davon umfasst.

3. Materialsatz zur Verwendung in dem Verfahren nach Anspruch 1 oder 2, umfassend:
ein Detaillierungsmittel, das Folgendes umfasst:
Wasser,
eine Spritzreduktionsverbindung, die einen Infrarot-Absorptionsfarbstoff und/oder ein polymeres Bindemittel umfasst, das ein Styrol-Acrylharz, ein Polyurethan oder Mischungen davon umfasst,
und
ein wasserlösliches Co-Lösungsmittel; und
ein Schmelzmittel, das Folgendes umfasst:
Wasser und
einen Energieabsorber.

4. Materialsatz nach Anspruch 3, wobei die Spritzreduktionsverbindung einen schwarzen Infrarot-Absorptionsfarbstoff umfasst.

5. Materialsatz nach Anspruch 3, wobei die Spritzreduktionsverbindung Cyan oder blauen Infrarot-Absorptionsfarbstoff umfasst.

6. Materialsatz nach Anspruch 3, wobei die Spritzreduktionsverbindung einen schwarzen Infrarot-Absorptionsfarbstoff und ein Cyan oder einen blauen Infrarot-Absorptionsfarbstoff in einem Gewichtsverhältnis von 3 : 1 bis 10 : 1 umfasst.

7. Materialsatz nach Anspruch 3, wobei die Spritzreduktionsverbindung polymeres Bindemittel umfasst, das ein Styrol-Acrylharz, ein Polyurethan oder Mischungen davon umfasst.

8. Materialsatz nach Anspruch 3, wobei das Detaillierungsmittel das Wasser in einer Menge von 70 Gew.-% bis 90 Gew.-% und ein oder mehrere wasserlösliche Co-Lösungsmittel bei mehr als 10 Gew.-% bis weniger als 30 Gew.-% einschließt.

9. Materialsatz nach Anspruch 3, wobei der Energieabsorber ein Kohlenschwarzpigment umfasst.

10. Materialsatz nach Anspruch 3, der ferner ein thermoplastisches Polymerpulver umfasst.

11. Materialsatz nach Anspruch 10, wobei das thermoplastische Polymerpulver eine durchschnittliche Partikelgröße von 10 µm (Mikrometer) bis 200 µm (Mikrometer) aufweist.

12. Materialsatz nach Anspruch 10, wobei das thermoplastische Polymerpulver Polyamid-6-Pulver, Polyamid-9-Pulver, Polyamid-11-Pulver, Polyamid-12-Pulver, Polyamid-66-Pulver, Polyamid-612-Pulver, Polyethylenpulver, thermoplastisches Polyurethanpulver, Polypropylenpulver, Polyesterpulver, Polycarbonatpulver, Polyetherketonpulver, Polyacrylatpulver, Polystyrolpulver oder eine Kombination davon umfasst.

13. 3-dimensionales Drucksystem, das Folgendes umfasst:
ein Pulverbett, das ein thermoplastisches Polymerpulver umfasst;
einen Fluidstrahldrucker, der Folgendes umfasst:
einen ersten Fluidausstoßer, der mit einem Reservoir eines Detaillierungsmittels in Verbindung steht, wobei der erste Fluidausstoßer dazu konfiguriert ist, das Detaillierungsmittel auf das Pulverbett zu drucken, wobei das Detaillierungsmittel Wasser umfasst; eine Spritzreduktionsverbindung, die einen Infrarot-Absorptionsfarbstoff und/oder ein polymeres Bindemittel umfasst, das ein Styrol-Acrylharz, ein Polyurethan oder Mischungen davon umfasst; und ein wasserlösliches Co-Lösungsmittel;
einen zweiten Fluidausstoßer, der mit einem Reservoir eines Schmelzmittels in Verbindung steht, wobei der zweite Fluidausstoßer dazu konfiguriert ist, das Schmelzmittel auf das Pulverbett zu drucken, wobei das Schmelzmittel einen Energieabsorber einschließt;
und
eine Schmelzstrahlungsquelle, um das Pulverbett elektromagnetischer Strahlung auszusetzen, die ausreicht, um thermoplastisches Polymerpulver zu verschmelzen, das mit dem Schmelzmittel bedruckt wurde.

14. 3-dimensionales Drucksystem nach Anspruch 13, wobei die Schmelzstrahlungsquelle ebenso ausreicht, um die Spritzreduktionseigenschaften der Spritzreduktionsverbindung in Bezug auf eine anschließend aufgebrachte Schicht aus thermoplastischem Polymerpulver zu verbessern.

## Revendications

1. Procédé d'impression d'une pièce tridimensionnelle, comprenant :
l'application d'une première couche de poudre de polymère thermoplastique sur un lit de poudre ;
l'application d'un agent de fusion sur une première partie de la première couche ;
l'application d'un agent de détail sur une seconde partie de la première couche immédiatement adjacente à la première partie, dans lequel l'agent de détail comprend un composé de réduction d'éclaboussures comprenant un colorant absorbant l'infrarouge, un liant polymère, ou une combinaison de ceux-ci ;
l'exposition du lit de poudre à une énergie électromagnétique suffisante pour fusionner l'agent de fusion avec la poudre de polymère thermoplastique au niveau de la première partie ;
l'application d'une seconde couche de poudre de polymère thermoplastique sur le lit de poudre au-dessus de la première couche ; et
l'application d'un agent de détail sur la seconde partie du polymère thermoplastique sans éclaboussure substantielle de poudre aux emplacements où la poudre de polymère thermoplastique n'est pas fusionnée.

2. Procédé selon la revendication 1, dans lequel le composé de réduction d'éclaboussures comprend un liant polymère qui comprend une résine styrène-acrylique, un polyuréthane, ou des mélanges de ceux-ci.

3. Matériau défini pour une utilisation dans le procédé selon la revendication 1 ou 2, comprenant :
un agent de détail, comprenant :
de l'eau,
un composé de réduction d'éclaboussures comprenant un colorant absorbant l'infrarouge et/ou un liant polymère qui comprend une résine styrène-acrylique, un polyuréthane, ou des mélanges de ceux-ci, et
un cosolvant hydrosoluble ; et
un agent de fusion, comprenant :
de l'eau ; et
un absorbeur d'énergie.

4. Ensemble de matériaux selon la revendication 3, dans lequel le composé de réduction d'éclaboussures comprend du colorant noir absorbant l'infrarouge.

5. Ensemble de matériaux selon la revendication 3, dans lequel le composé de réduction d'éclaboussures comprend du colorant cyan ou bleu absorbant l'infrarouge.

6. Ensemble de matériaux selon la revendication 3, dans lequel le composé de réduction d'éclaboussures comprend un colorant noir absorbant l'infrarouge et un colorant cyan ou bleu absorbant l'infrarouge à un rapport pondéral de 3:1 à 10:1.

7. Ensemble de matériaux selon la revendication 3, dans lequel le composé de réduction d'éclaboussures comprend un liant polymère qui comprend une résine styrène-acrylique, un polyuréthane, ou des mélanges de ceux-ci.

8. Ensemble de matériaux selon la revendication 3, dans lequel l'agent de détail comporte de l'eau en une quantité de 70 à 90 % en poids et un ou plusieurs cosolvants hydrosolubles de plus de 10 % en poids à moins de 30 % en poids.

9. Ensemble de matériaux selon la revendication 3, dans lequel l'absorbeur d'énergie comprend un pigment noir de carbone.

10. Ensemble de matériaux selon la revendication 3, comprenant en outre une poudre de polymère thermoplastique.

11. Ensemble de matériaux selon la revendication 10, dans lequel la poudre de polymère thermoplastique a une taille moyenne de particules de 10 µm (microns) à 200 µm (microns).

12. Ensemble de matériaux selon la revendication 10, dans lequel la poudre de polymère thermoplastique comprend une poudre de polyamide-6, une poudre de polyamide-9, une poudre de polyamide-11, une poudre de polyamide-12, une poudre de polyamide-66, une poudre de polyamide-612, une poudre de polyéthylène, une poudre de polyuréthane thermoplastique, une poudre de polypropylène, une poudre de polyester, une poudre de polycarbonate, une poudre de polyéther cétone, une poudre de polyacrylate, une poudre de polystyrène ou une combinaison de celles-ci.

13. Système d'impression tridimensionnel, comprenant :
un lit de poudre comprenant une poudre de polymère thermoplastique ;
une imprimante à jet de fluide comprenant :
un premier éjecteur de fluide en communication avec un réservoir d'agent de détail, dans lequel le premier éjecteur de fluide est configuré pour imprimer l'agent de détail sur le lit de poudre, dans lequel l'agent de détail comprend de l'eau ; un composé de réduction d'éclaboussures comprenant un colorant absorbant l'infrarouge et/ou un liant polymère qui comprend une résine styrène-acrylique, un polyuréthane, ou des mélanges de ceux-ci ; et un cosolvant hydrosoluble ;
un second éjecteur de fluide en communication avec un réservoir d'un agent de fusion, dans lequel le second éjecteur de fluide est conçu pour imprimer l'agent de fusion sur le lit de poudre, dans lequel l'agent de fusion comporte un absorbeur d'énergie ;
et
une source de rayonnement de fusion pour exposer le lit de poudre à un rayonnement électromagnétique suffisant pour fusionner la poudre de polymère thermoplastique qui a été imprimée avec l'agent de fusion.

14. Système d'impression tridimensionnelle selon la revendication 13, dans lequel la source de rayonnement de fusion est également suffisante pour améliorer les propriétés de réduction des éclaboussures du composé de réduction d'éclaboussures par rapport à une couche de poudre de polymère thermoplastique appliquée par la suite.
